Europäisches Patentamt

European Patent Office

Office européen des brevets

(19)

(11) **EP 0 611 181 B1**

(12) **FASCICULE DE BREVET EUROPEEN**

(45) Date de publication et mention
de la délivrance du brevet:
**27.10.1999  Bulletin 1999/43**

(51) Int Cl.⁶: **G06T 11/00**

(21) Numéro de dépôt: **94400176.7**

(22) Date de dépôt: **27.01.1994**

(54) **Procédé de reconstruction d'images tridimensionnelles d'un objet évoluant**

Rekonstruktionsverfahren von drei-dimensionalen Bildern eines beweglichen Objekts

Three-dimensional picture reconstruction process of evolving object

(84) Etats contractants désignés:
**DE FR GB NL**

(30) Priorité: **29.01.1993  FR 9300946**

(43) Date de publication de la demande:
**17.08.1994  Bulletin 1994/33**

(73) Titulaire: **COMMISSARIAT A L'ENERGIE
ATOMIQUE
75015 Paris (FR)**

(72) Inventeurs:
• **Delageniere, Solange
F-38000 Grenoble (FR)**
• **Grangeat, Pierre
F-38330 Saint Ismier (FR)**

(74) Mandataire: **Ilgart, Jean-Christophe et al
c/o Société Brevatome,
25, rue de Ponthieu
F-75008 Paris (FR)**

(56) Documents cités:
• **ICASSP83.PROCEEDINGS, vol.1, 14 Avril 1983,
USA pages 131 - 134 MEDOFF ET AL. 'the use of
a priori information in image reconstruction
from limited data'**
• **SYSTEMS AND COMPUTERS IN JAPAN, vol.23,
no.3, 1992, USA pages 62 - 74, XP000269785
KUDO ET AL. 'reconstruction of magnetic
resonance images by iterative methods'**
• **OPTICAL ENGINEERING, vol.29, no.4, Avril
1990, USA pages 279 - 288, XP000114256
PRASAD ET AL. 'three-dimensional image
restoration using constrained optimization
techniques'**

## Description

L'invention concerne un procédé de reconstruction d'images tridimensionnelles d'un objet évoluant, dont l'aspect change avec le temps ou qui se déplace.

Les procédés classiques consistent à prendre un certain nombre de vues de l'objet par un réseau bidimensionnel de capteurs qui est successivement installé à diverses orientations autour de l'objet. Les capteurs mesurent les sommes ou projections d'une fonction ou d'une propriété à mesurer sur des lignes traversant l'objet. Les lignes peuvent être des rayons émis par une source dont on mesure l'atténuation totale à travers l'objet, ou un rayon composé, produit par l'activité d'émission totale des points de l'objet situés sur la ligne de focalisation de chaque capteur. Ces deux situations ne diffèrent guère quant aux principes des calculs et de la reconstruction, car tout se passe dans la seconde comme si le rayonnement était émis d'une source virtuelle. La combinaison des sommes d'atténuation ou d'émission permet de retrouver la valeur prise par la propriété correspondante de l'objet en chaque point d'un réseau de discrétisation.

On peut utiliser pour reconstruire l'image des méthodes analytiques dans lesquelles les mesures sont soumises à une transformation analytique, de Fourier ou de Radon par exemple, et une formule d'inversion de la transformée des mesures est ensuite appliquée avant d'obtenir les valeurs de la propriété sur les points du réseau de discrétisation de l'objet par des interpolations entre des points du volume de l'objet pour lesquels l'inversion de la transformée est calculée ; ou des méthodes algébriques dans lesquelles la discrétisation de l'objet intervient dès le début et où le problème est exprimé par un calcul matriciel ou un système d'équations linéaires dans lequel les mesures sont exprimées par des combinaisons linéaires des valeurs de la propriété sur les points de discrétisation pondérées par des coefficients qui expriment la contribution de chacun des points de la valeur de la propriété en fonction des situations géométriques des points considérés par rapport aux différents rayons de mesure. En pratique la résolution est faite (par exemple) par une méthode itérative.

Les méthodes algébriques nécessitent en général des calculs plus nombreux ; mais comme les coefficients de pondération peuvent toujours être calculés, ils permettent d'éviter les difficultés théoriques de trouver une formule d'inversion convenable, et les inconvénients dus au nombre des calculs peuvent être sensiblement atténués si une ou des informations a priori sur l'objet est ou sont introduites. En effet, on a souvent une idée préétablie assez correcte de la répartition de la propriété (en termes de densité ou de forme ou de texture, etc.) mesurée dans l'objet, au moins dans une partie de celui-ci, et l'introduction de la description correspondante comme premier stade d'itération ou comme résultat définitif pour certaines zones de l'objet améliore toujours le résultat et peut accélérer la convergence.

Une telle méthode est décrite dans l'article intitulé "The use of a priori information in image reconstruction from limited data", ICASS P83 Proceedings, vol.1, 14 April 1983, USA, pages 131-134, Medoff et al. Une méthode utilisant une transformation de Fourier est décrite dans "Reconstruction of Magnetic Resonance Images by Iterative Methods", Systems and Computers in Japan, vol.23, no.3, 1992, USA, pages 62-74, Kudo et al.

L'invention est toutefois relative à des reconstructions menées sur des objets changeants, et d'autres problèmes se posent alors car les mesures successives sont obtenues pour des états différents de l'objet, ce qui rend les reconstructions floues, que la méthode de reconstruction soit algébrique ou analytique.

Plusieurs solutions ont été proposées pour échapper à ce désavantage. On peut par exemple prendre toutes les mesures simultanément, ce qui impose que l'appareil soit équipé du nombre correspondant de réseaux de détecteurs afin d'obtenir des images très nettes, la résolution du système étant dans ce cas complète. Cette solution est peu réaliste car trop difficile à mettre en oeuvre et trop onéreuse. Une autre solution mise en oeuvre consiste à prendre seulement une partie des mesures simultanément, ce qui ne permet pas d'obtenir des images très nettes, la résolution du système n'étant pas complète. On a encore proposé, pour les phénomènes cycliques tels physiologiques (imagerie cardiaque), de ne prendre les mesures qu'au même point de chaque cycle, mais tous les phénomènes de changement de l'objet à reconstituer ne sont évidemment pas cycliques : c'est le cas des mesures où on mesure le rayonnement émis par un traceur radioactif injecté dans l'organisme et qui se dilue rapidement. On trouve même des situations où les mesures diffèrent forcément pour des phénomènes cycliques. Enfin, des mesures synchronisées sur chaque cycle durent longtemps au total et ne permettent de reconstituer que des images de l'objet à la phase des mesures.

L'invention consiste, brièvement résumée, à prendre les mesures successivement et à des intervalles assez rapides, sans se soucier d'être en synchronisme avec un éventuel cycle, et de corriger les mesures en leur appliquant une correction qui traduit l'évolution supposée du phénomène. Dans la réalisation envisagée la plus courante, on attribue au phénomène une progression uniforme, ce qui simplifie grandement les calculs matriciels souvent compliqués qui doivent être mis en oeuvre.

Le procédé de reconstruction d'images tridimensionnelles d'un objet défini par des valeurs prises par une propriété en un réseau de points de l'objet consiste à faire à des instants des mesures de sommes de la propriété sur des lignes projetées sur des capteurs d'un réseau bidimensionnel, le réseau de capteurs étant orienté différemment autour de l'objet à chaque mesure et les valeurs de la propriété changeant avec le temps, puis à résoudre un système d'équations linéaires exprimant les sommes mesurées de la propriété en fonction des valeurs de la propriété sur les points et de coefficients de pondération, caractérisé en ce qu'il consiste aussi à exprimer les changements en chaque point du réseau de points entre les mesures successives par une fonction de changement (qui permet de relier l'objet à un instant donné au même objet à un ou plusieurs autres instants), et à résoudre le système d'équations en utilisant la fonction de changement pour exprimer les sommes mesurées en fonction des valeurs de la propriété sur les points prises pour certains des instants seulement.

On va maintenant décrire plus en détail à l'aide des figures suivantes annexées à titre illustratif et non limitatif :

- la figure 1 est une vue schématique des éléments matériels de l'invention,
- et la figure 2 est un diagramme de résumé.

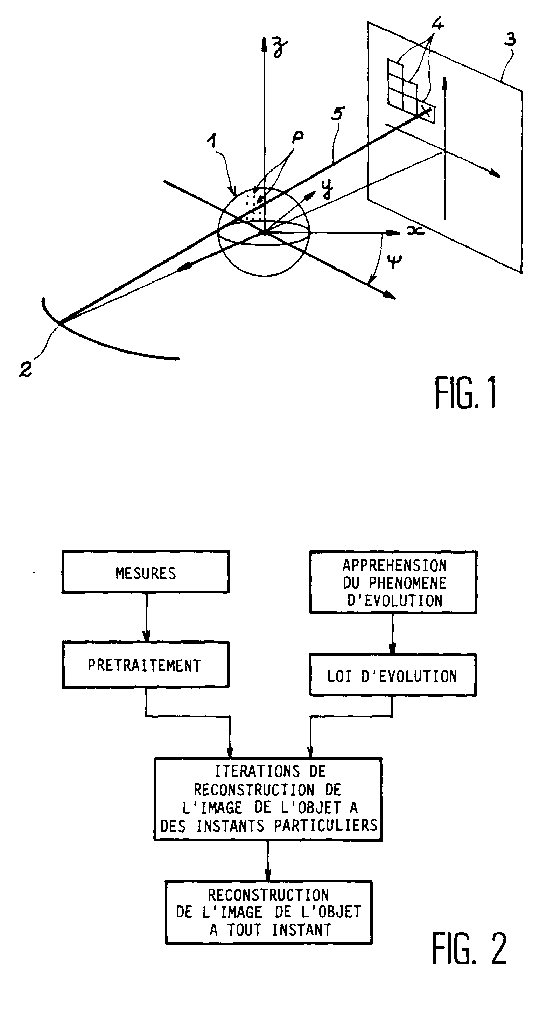

L'objet 1 dont on veut reconstituer l'image est représenté sous forme d'une boule sur la figure 1, mais il peut être de n'importe quelle forme. Il est disposé entre une source 2 et un réseau 3 bidimensionnel de capteurs 4 qui sont disposés sur un plan et focalisés vers la source 2. les rayons 5 qui correspondent aux lignes de focalisation peuvent être, comme on l'a vu, réellement émis par la source 2 vers les capteurs 4 ou converger vers une source 2 fictive selon que la propriété qu'on mesure est l'atténuation d'un rayonnement à travers l'objet ou l'émission d'un rayonnement par l'objet. L'objet 1 est discrétisé en un certain nombre de points P qui peuvent être disposés pour former un maillage cubique défini par des coordonnées cartésiennes X, Y et Z régulièrement réparties dans un repère constitué par des axes x, y et z perpendiculaires et concourant au centre de l'objet 1.

Les mesures consistent le plus simplement à déplacer la source 2 et le réseau 3 de capteurs sur des trajectoires circulaires autour de l'objet 1 en prenant plusieurs images bidimensionnelles de l'objet 1 définies par un angle a de rotation de la source 2 et du réseau 3, qui lui fait face, dans un plan commun défini par les axes x et y. De façon équivalente, l'objet 1 peut être disposé sur un support tournant et la source 2 et le réseau 3 de capteurs 4 sont alors immobiles. Des trajectoires de forme plus compliquée, à trois dimensions, sont aussi possibles. Dans tous les cas, le système d'équations linéaires à résoudre est résumé par la formule (1) :

$$m = H.f + b$$

où m est une matrice-colonne des mesures, f une matrice-colonne de la propriété recherchée sur les points de l'objet 1, H la matrice de passage qui regroupe les coefficients de pondération et b représente le bruit de mesures qu'on peut éventuellement ne pas considérer dans les calculs. S'il y a NPSI mesures, NP et NQ lignes et colonnes de capteurs 4, NX, NY et NZ lignes, rangées et colonnes de points P suivant les trois dimensions, la dimension de f est NX.NY.NZ et la dimension de m est NP.NQ.NPSI. Si l'objet 1 est changeant, la situation est cependant plus compliquée car la matrice f est modifiée à chaque mesure et on arrive donc jusqu'à NX.NY.NZ.NPSI inconnues pour NP.NQ.NPSI équations, ce qui montre que le système est franchement sous-déterminé si par exemple NX, NY, NZ, NP et NQ sont du même ordre de grandeur, ce qui est souvent vérifié.

On décide donc de décrire une évolution pré-établie de l'objet 1 en fonction du temps, soit par exemple par l'équation (2) :

$$f(t) = A.f(t-1) + B.f(t+1) \qquad (2)$$

où A et B sont deux matrices de description de l'évolution et f(t- 1), f(t) et f(t+1) désignent les valeurs (groupées en matrices- colonnes) de la propriété sur les points P de l'objet 1 pendant trois mesures consécutives.

L'équation (3) que voici peut être déduite de l'équation (2), et elle peut être notée conformément à l'équation (4) sous forme matricielle. L'équation (5) est ensuite déduite par récurrence de l'équation (4), ce que l'on écrit encore en fonction de l'état initial de l'objet 1 et de son état final, selon l'équation (6).

$$f(t + 1) = B^{-1}.(1 - A).f(t) + B^{-1}.A.(f(t)-f(t-1)) \qquad (3)$$

$$\begin{bmatrix} f(t) \\ f(t+1) \end{bmatrix} = \begin{bmatrix} 0 & I \\ -B^{-1}A & B^{-1} \end{bmatrix} \cdot \begin{bmatrix} f(t-1) \\ f(t) \end{bmatrix} \qquad (4)$$

$$\begin{bmatrix} f(t) \\ f(t+1) \end{bmatrix} = R^{(t-1)} \cdot \begin{bmatrix} f(1) \\ f(2) \end{bmatrix} \text{ où } R^{(t-1)} = \begin{bmatrix} \alpha(t) & \beta(t) \\ \alpha(t+1) & \beta(t+1) \end{bmatrix} \qquad (5)$$

$$f(t) = A'(t).f(1) + B'(t).f(NPSI) \qquad (6)$$

où

$$A'(t) = \alpha(t) - \beta(t).\beta(NPSI)^{-1}.\alpha(NPSI)$$

et

$$B'(t) = \beta(t).\beta(NPSI)^{-1}.$$

La généralisation à toutes les étapes de prises de mesures est résumée par l'équation (7), et le calcul des matrices A' et B', ou $\alpha$ et $\beta$, est obtenu facilement en diagonalisant la matrice R et en calculant ensuite ses puissances.

$$\begin{bmatrix} f(1) \\ f(2) \\ ... \\ f(NPSI) \end{bmatrix} = \begin{bmatrix} A'(1) & B'(1) \\ A'(2) & B'(2) \\ ... & ... \\ A'(NPSI) & B'(NPSI) \end{bmatrix} \cdot \begin{bmatrix} f(1) \\ f(NPSI) \end{bmatrix} \qquad (7)$$

Le problème de reconstruction est alors exprimé par l'équation (8) qui est un système linéaire de 2.NVOX inconnues f(1) et f(NPSI) (NVOX désignant le nombre de voxels ou de points P de l'objet 1) pour NP.NQ.NPSI équations :

$$\begin{bmatrix} m(1) \\ m(2) \\ ... \\ m(NPSI) \end{bmatrix} = \begin{bmatrix} H(1) & 0 & .. & .. \\ 0 & H(2) & 0 & .. \\ .. & .. & .. & .. \\ 0 & .. & 0 & H(NPSI) \end{bmatrix} \cdot \begin{bmatrix} A'(1) & B'(1) \\ A'(2) & B'(2) \\ .. & .. \\ A'(NPSI) & B'(NPSI) \end{bmatrix} \cdot \begin{bmatrix} f(1) \\ f(NPSI) \end{bmatrix} + \begin{bmatrix} b \end{bmatrix}$$

Par exemple, l'équation (8) est résolue de façon itérative en utilisant une méthode algébrique et en adaptant un algorithme de type SART (Simultaneous Algebric Reconstruction Technics).

Rappelons que les matrices H désignent les coefficients connus qui expriment par des relations géométriques de proximité la contribution entre des points P de l'objet 1 aux rayons 5 pour les diverses mesures.

La figure 2 illustre le procédé. Les prétraitements désignent les conversions pour passer des résultats bruts des mesures des capteurs aux caractéristiques physiques de l'objet 1 (par exemple la conversion logarithmique qui fait passer de l'intensité du rayonnement détecté aux coefficients d'atténuation). On a constaté de bons résultats en pratique, avec un flou moindre que par les méthodes habituelles où l'objet est supposé immuable. On remarque que la méthode de l'invention permet de calculer l'état de l'objet 1 pour n'importe quel instant en utilisant l'équation (7). Les matrices A et B comportent en principe peu de coefficients, de sorte que les calculs sont rapides. La loi d'évolution dépend bien sûr du phénomène rencontré : il peut s'agir d'une évolution purement temporelle des points de l'objet, sans qu'il y ait d'influence entre un point et ses voisins, ce qui est vrai quand un objet indéformable se déplace durant l'acquisition. Les matrices A et B sont alors purement diagonales. Si des phénomènes de diffusion spatiale existent, tels que la dilatation ou la compression d'organes ou plus généralement des mouvements d'une partie de l'objet au sein de celui-ci, les matrices A et B sont plus remplies mais leurs coefficient restent normalement peu nombreux et groupés sur quelques diagonales.

Le phénomène d'évolution peut souvent être considéré comme se déroulant à vitesse constante. S'il est purement temporel et uniforme, on peut démontrer que A=B=I/2 dans ce cas très simple.

D'ailleurs il arrive fréquemment que les changements ne portent que sur certains points de l'objet, le reste de l'objet étant immuable, ce qui réduit encore les calculs.

Une généralisation de l'équation (2) ci-dessus peut être proposée. Elle consiste à donner la fonction d'évolution sous forme de la contribution d'une série d'états antérieurs et postérieurs, soit :

$$f(t) = \sum_{n=1}^{NA} An\, f(t-n) + \sum_{n=1}^{NB} Bn\, f(t+n) \qquad (9)$$

où on se sert de NA états antérieurs et de NB états postérieurs à l'aide des matrices An et Bn qui représentent leur contribution. Si on pose NA=NB=N, l'équation (7) peut être généralisée comme voici :

$$
\begin{pmatrix} f(1) \\ .. \\ .. \\ f(NPSI) \end{pmatrix}
=
\begin{pmatrix} C1(1) & & CN(1) \\ .. & & .. \\ .. & & .. \\ C1(NPSI) & & CN(NPSI) \end{pmatrix}
\begin{pmatrix} f(i_1) \\ .. \\ .. \\ F(i_N) \end{pmatrix}
\qquad (10)
$$

où Cj(i) est la contribution de l'image i à l'image j et f(i) est l'image à un instant i tel que $1 \leq i \leq (NPSI)$.

Dans un mouvement de propagation d'un produit de contraste moléculaire, on choisira de préférence les instants de début et de fin du processus pour représenter le phénomène. Dans un mouvement respiratoire, on prendra en compte l'inspiration, l'expiration et avantageusement quelques états intermédiaires, deux par exemple, à cause des mouvements complexes caractéristiques de cette fonction organique.

L'invention pourra trouver emploi dans les domaines d'application habituels de l'imagerie, à savoir la médecine et les contrôles non destructifs de l'industrie. Le rayonnement sera fréquemment formé de rayons X. L'évolution de l'objet peut, comme on l'a vu, englober non seulement un déplacement mais un changement de forme, de volume, ou un état propagatif ou transitoire, et elle peut être uniforme avec le temps ou non.

**Revendications**

1. Procédé de reconstruction d'images tridimensionnelles d'un objet (1) défini par des valeurs prises par une propriété (f) en un réseau de points (P) de l'objet, consistant à faire à des instants (1, ..., t, ..., NPSI) des mesures (m) de sommes de la propriété sur des lignes (5) projetées sur des capteurs (4) d'un réseau bidimensionnel (3), le réseau de capteurs étant orienté différemment autour de l'objet à chaque mesure et les valeurs de la propriété changeant avec le temps, puis à résoudre un système d'équations linéaires exprimant les sommes mesurées de la propriété en fonction des valeurs de la propriété sur les points et de coefficients de pondération (H), caractérisé en ce qu'il consiste aussi à exprimer les changements en chaque point du réseau de points entre les mesures successives par une fonction de changement et à résoudre le système d'équations en utilisant la fonction de changement pour exprimer les sommes mesurées en fonction des valeurs de la propriété sur les points prises pour certains des instants seulement.

2. Procédé selon la revendication 1, caractérisé en ce que la fonction de changement est définie par des matrices invariables pour exprimer le changement des valeurs de la propriété à un instant donné en fonction de la valeur de la propriété à l'instant précédent et à l'instant suivant.

3. Procédé selon la revendication 1 ou 2, caractérisé en ce que le système d'équations est résolu par itérations.

**Patentansprüche**

1. Rekonstruktionsverfahren von dreidimensionalen Bildern eines Objekts (1), definiert durch Werte, genommen bzw. gemessen mittels einer Eigenschaft (f) in einem Gitter aus Punkten (P) des Objekts, darin bestehend, zu Zeitpunkten (1, ..., t ..., NPSI) Messungen (m) von Summen der Eigenschaft an Linien (5) zu machen, die auf Sensoren (4) eines zweidimensionalen Gitters (3) projiziert werden, wobei das Sensorengitter bei jeder Messung um das Objekt herum anders ausgerichtet ist und die Werte der Eigenschaft sich mit der Zeit ändern, sodann ein System von linearen Gleichungen zu lösen, die die gemessenen Summen der Eigenschaft in Abhängigkeit von den Werten der Eigenschaft in den Punkten und von Gewichtungsfaktoren (H) ausdrücken,
   **dadurch gekennzeichnet**,
   daß es auch darin besteht, die Änderungen in jedem Punkt des Punktegitters zwischen den aufeinanderfolgenden Messungen durch eine Änderungsfunktion auszudrücken und das Gleichungssystem zu lösen, indem die Änderungsfunktion benutzt wird, um die gemessenen Summen in Abhängigkeit von den Werten der Eigenschaft in den genommenen bzw. gemessenen Punkten nur für bestimmte Zeitpunkte auszudrücken.

2. Verfahren nach Anspruch 1, dadurch gekennzeichnet, daß die Änderungsfunktion durch invariable Matrizen definiert wird, um die Änderung der Werte der Eigenschaft zu einem bestimmten Zeitpunkt in Abhängigkeit von dem Wert der Eigenschaft zu dem vorangehenden Zeitpunkt und zu dem nachfolgenden Zeitpunkt auszudrücken.

3. Verfahren nach Anspruch 1 oder 2, dadurch gekennzeichnet, daß das Gleichungssystem durch Iteration gelöst wird.

**Claims**

1. Method for reconstructing three-dimensional images of an object (1) defined by values assumed by a property (f) in a network of points (P) of the object and consisting of carrying out at certain moments (1, ...., t, ..., NPSI) measurements (m) of the sums of the property on lines (5) projected onto the sensors (4) of a two-dimensional network (3), the network of sensors being orientated differently around the object on each measurement and the values of the property changing with the time and then of resolving a system of linear equations expressing the measured sums of the property according to the values of the property on the points and weighting coefficients (H), characterized in that it also consists of expressing the changes at each point of the network of points between the successive measurements by a change function and of resolving the system of equations by using the changing function so as to express the measured sums according to the values of the property on the points taken solely for certain moments.

2. Method according to claim 1, characterized in that the change function is defined by invariable matrices so as to express the change of values of the property at a given moment according to the value of the property at the preceding moment and at the next moment.

3. Method according to claim 1 or 2, characterized in that the system of equations is resolved by iterations.

FIG. 1

MESURES

PRETRAITEMENT

APPREHENSION
DU PHENOMENE
D'EVOLUTION

LOI D'EVOLUTION

ITERATIONS DE
RECONSTRUCTION DE
L'IMAGE DE L'OBJET A
DES INSTANTS PARTICULIERS

RECONSTRUCTION
DE L'IMAGE DE L'OBJET
A TOUT INSTANT

FIG. 2

7